# EUROPEAN PATENT SPECIFICATION

(11) **EP 3 550 536 B1**
(45) Date of publication and mention of the grant of the patent: **29.01.2025**
(21) Application number: 17883109.5
(22) Date of filing: 24.02.2017
(51) Int. Cl.: G08B 1/08, G01C 21/34

(54) **METHOD AND DEVICE FOR DETERMINING GEOGRAPHICAL LOCATION OF USER TAKING A VEHICLE**
VERFAHREN UND VORRICHTUNG ZUR BESTIMMUNG EINES GEOGRAFISCHEN STANDORTS EINER BENUTZERS, DER EIN FAHRZEUG NIMMT
PROCÉDÉ ET DISPOSITIF DE DÉTERMINATION D'EMPLACEMENT GÉOGRAPHIQUE D'UN UTILISATEUR PRENANT UN VÉHICULE

(30) Priority: 24.12.2016 CN 201611210213
(43) Date of publication of application: 09.10.2019
(73) Proprietor: Huawei Technologies Co., Ltd., Longgang District Shenzhen, Guangdong 518129 (CN)
(72) Inventor: SHI, Xinliang, Shenzhen Guangdong 518129 (CN)
(74) Representative: Epping - Hermann - Fischer
(86) International application number: PCT/CN2017/074809
(87) International publication number: WO 2018/113087

(56) References cited:
- CN-A- 104 157 161
- CN-A- 106 169 227
- CN-A- 106 169 227
- CN-A- 106 197 473
- CN-A- 106 197 473
- US-A1- 2016 332 589
- LIAO ET AL: "Learning and inferring transportation routines", ARTIFICIAL INTELLIGENCE, ELSEVIER SCIENCE PUBLISHER B.V., AMSTERDAM, NL, vol. 171, no. 5-6, 14 April 2007 (2007-04-14), pages 311 - 331, XP022040074, ISSN: 0004-3702, DOI: 10.1016/J.ARTINT.2007.01.006
- "Distributed Computing : 19th International Conference, DISC 2005, Cracow, Poland, September 26-29, 2005. Proceedings", vol. 2864, 1 January 2003, SPRINGER BERLIN HEIDELBERG, Berlin, Heidelberg, ISBN: 978-3-319-11202-2, ISSN: 0302-9743, article DONALD J. PATTERSON ET AL: "Inferring High-Level Behavior from Low-Level Sensors", pages: 73 - 89, XP055640598, DOI: 10.1007/978-3-540-39653-6_6
- DANIEL ASHBROOK ET AL: "Using GPS to learn significant locations and predict movement across multiple users", PERSONAL AND UBIQUITOUS COMPUTING, SPRINGER VERLAG, LONDON, GB, vol. 7, no. 5, 1 October 2003 (2003-10-01), pages 275 - 286, XP058175213, ISSN: 1617-4909, DOI: 10.1007/S00779-003-0240-0

## Description

### TECHNICAL FIELD

This application relates to the field of mobile terminal technologies, and in particular, to a method and a device for determining a geographical location for a user to take bus.

### BACKGROUND

With development of a city, especially in a first-tier city, people usually lives in suburb areas far away from a downtown, but usually works in business areas of the downtown. In addition, because of increasing traffic pressure of the city, road congestion, private vehicle restriction, and the like, a growing quantity of citizens tend to take a bus to get on/off duty. In a conventional trip manner, a citizen does not know when a bus will arrive at a bus stop, and therefore, in this conventional trip manner, when the citizen selects to take a bus to get on/off duty, one inevitable problem is: the citizen may wait for the bus for a long time at the bus stop.

However, currently, with rapid development of the Internet, real time bus query software emerges, and perfectly resolves the foregoing problem. In the prior art, if the user needs to query current location information of the bus by using the foregoing real time bus query software, the following several steps usually need to be performed: 1. Install the real time bus query software in a mobile terminal (for example, a smartphone); 2. Start the installed software; 3. Input a start bus stop and a destination bus stop of the user in a home page of the software. In this case, the mobile terminal may query, based on the start bus stop and the destination bus stop that are input by the user, a bus meeting a condition of passing by the foregoing two bus stops, and display current location information of the bus meeting the foregoing condition on the mobile terminal. The user may estimate a departure time based on the current location information of the bus displayed on the mobile terminal to avoid waiting for the bus in an outdoor bus stop for a long time.

It may be learned from the foregoing description that in the existing real time bus query software, the user still needs to manually input the start bus stop and the destination bus stop, and consequently, efficiency of the user in querying bus information is low.

LIAO ET AL, "Learning and inferring transportation routines", ARTIFICIAL INTELLIGENCE, ELSEVIER SCIENCE PUBLISHER B.V., AMSTERDAM, NL, vol. 171, no. 5-6, doi:10.1016/J.ARTINT.2007.01.006, ISSN 0004-3702 discloses a hierarchical Markov model that can learn and infer a user's daily movements through an urban community. The model uses multiple level sof abstraction in order to bridge the gap between raw GPS sensor measurements and high level information such as a user's destination and mode of transportation. To achieve efficient inference Rao-Blackwellized particle filters are applied at multiple levels of the model hierarchy. Locations such as bus stops and parking lots, where the user frequently changes mode of transportation are learned from GPS data logs without manual labeling of training data. It is experimentally demonstrated how to accurately detect novel behavior or user errors (e.g. taking a wrangbus) by explicitly modeling activities in the context of the user's historical data.

Donald J. Patterson ET AL, "Inferring High-Level Behavior from Low-Level Sensors", Distributed Computing : 19th International Conference, DISC 2005, Cracow, Poland, Proceedings, Berlin, Heidelberg, Springer Berlin Heidelberg, vol. 2864, pages 73 - 89, doi:10.1007/978-3-540-39653-6_6, ISSN 0302-9743, ISBN 978-3-319-11202-2 discloses a method of learning a Bayesian model of a traveler moving through an urban environment. This technique simultaneously learns a unified model of the traveler's current mode of transportation as well as his most likely route, in an unsupervised manner. The model is implemented using particle filters and learned using Expectation-Maximization. The training data is drawn from a GPS sensor stream that was collected over a period of three months. It is demonstrated that by adding more external knowledge about bus routes and bus stops, accuracy is improved.

DANIEL ASHBROOK ET AL, "Using GPS to learn significant locations and predict movement across multiple users", PERSONAL AND UBIQUITOUS COMPUTING, SPRINGER VERLAG, LONDON, GB, vol. 7, no. 5, doi:10.1007/S00779-003-0240-0, ISSN 1617-4909 discloses, that wearable computers have the potential to act as intelligent agents in everyday life and to assist the user in a variety of tasks, using context to determine how to act. Location is the most common form of context used by these agents to determine the user's task. However, another potential use of location context is the creation of a predictive model of the user's future movements. A system that automatically clusters GPS data taken over an extended period of time into meaningful locations at multiple scales is presented. These locations are then incorporated into a Markov model that can be consulted for use with a variety of applications in both single-user and collaborative scenarios.

CN 106 169 227 A discloses a trip prompting method and a wearing device, belonging to the field of the intelligent device. The objective is to solve the problem that users cannot know the traffic information in real time prior to the trip. The method comprises: monitoring and recording the user's trip time and the route information, and obtaining the user's trip rule information according to the recorded information; and reading the user's trip rule information, determining the current route to be used according to the rule information, and providing trip prompting for users before the user's trip according to the route to be used and the urban real-time traffic information. The trip prompting method and the wearing device can provide route prompting for users before the user's trip to allow the users to obtain the traffic information in real time and provide convenience for the user's trip.

CN 106 197 473 A discloses a moving behavior recognition method of equipment. The method comprises the following steps of obtaining moving data of equipment through a sensor; determining the moving behavior of the equipment according to the moving data; sending moving behavior information corresponding to the moving behavior through a preset transmission channel. In addition, the a moving behavior recognition device of the equipment is provided. By implementing the method and the device, the problems that the user monitoring requirements cannot be met by the monitoring method on children or other people requiring supervision; in addition, the goal of monitoring the position or the moving behavior track of a monitored person under the condition without locatable signals such as a GPS (global positioning system) can be achieved.

### SUMMARY

This application provides a method and a device for determining a geographical location for a user to take a bus, so as to improve efficiency of a user in querying bus information. The invention is defined by the appended claims. In the following, parts of the description and drawings referring to embodiments which are not covered by the claims are not presented as embodiments of the invention, but as examples useful for understanding the invention.

According to a first aspect, this application provides a method as defined in claim 1.

It may be learned that the terminal may automatically determine the geographical location at which the user takes the bus by detecting movement of the user, and the user does not need to manually input the bus taking geographical location. Efficiency of a user in querying trip information can be improved compared with the prior-art manner in which the user manually inputs the bus taking geographical location.

It may be learned that when the geographical location at which the user takes the bus and that is obtained after the clustering meets a specific rule, that is, meets a specific law, the trip information is generated based on the geographical location and is pushed to the user. This may ensure accuracy of the trip information pushed to the user, and avoid pushing incorrect trip information to the user because of randomicity of the trip of the user.

With reference to the first aspect, in a first possible implementation, when there are a plurality of geographical locations whose collection quantities meet the condition, the using, by the terminal, the geographical location whose collection quantity meets the condition as a geographical location at which the user takes the bus includes: obtaining, by the terminal, a weight of each geographical location whose collection quantity meets the condition; and using, by the terminal, a geographical location with a maximum weight as the geographical location at which the user takes the bus.

It may be learned that when the terminal obtains the plurality of geographical locations after the clustering, the geographical location at which the user takes the bus may be accurately found in the plurality of geographical locations in the weight setting manner.

With reference to the first aspect, in a second possible implementation, the method further includes:
displaying, by the terminal, the trip information; or broadcasting, by the terminal, the trip information; or displaying, by the terminal, a card including the trip information.

It may be learned that the terminal may directly display the trip information or directly broadcast the trip information with no need to install any software, so that it is convenient for the user during use.

With reference to the second possible implementation of the first aspect, in a third possible implementation, when the terminal displays the trip information, the method further includes: when detecting that a bus in the displayed trip information receives a trigger operation, displaying or broadcasting, by the terminal, driving information of the triggered bus, where the driving information includes at least congestion information of a road on which the triggered bus is driven.

It may be learned that the user may directly obtain, by performing the trigger operation, information about a congestion condition of a current road of the bus that the user needs to take, so that it is convenient for the user to take a trip.

According to a second aspect, this application further provides an apparatus for determining a geographical location for a user to take a bus as defined in claim 5

With reference to the second aspect, in a first possible implementation, when there are a plurality of geographical locations whose collection quantities meet the condition, and the geographical location whose collection quantity meets the condition is used as the geographical location at which the user takes the bus, the first processing unit is specifically configured to: obtain a weight of each geographical location whose collection quantity meets the condition; and use a geographical location with a maximum weight as the geographical location at which the user takes the bus.

With reference to the second aspect, in a second possible implementation, the apparatus further includes at least one of a display unit and a broadcast unit, where the display unit is configured to display the trip information or display a card including the trip information; and the broadcast unit is configured to broadcast the trip information.

With reference to the second possible implementation of the second aspect, in a third possible implementation, the display unit is further configured to: when it is detected that a bus in the displayed trip information receives a trigger operation, display driving information of the triggered bus, where the driving information includes at least congestion information of a road on which the triggered bus is driven; and the voice broadcast unit is further configured to broadcast the driving information.

Mutual reference may be made to implementation and beneficial effects of implementing the apparatus according to the foregoing second aspect or any possible implementation of the second aspect of the present invention and implementation and beneficial effects of implementing the method according to the foregoing first aspect or any possible implementation of the first aspect of the present invention, and no repeated description is provided.

According to a third aspect, this application further provides a readable storage medium, configured to store a software instruction used to perform functions of the foregoing first aspect or any possible implementation of the first aspect of this application, and the software instruction includes programs used to perform the method of the foregoing first aspect or any possible implementation of the first aspect of the present invention.

It may be learned from the foregoing that, in this embodiment of this application, the terminal may automatically obtain the first time period during which the user arrives from the first geographical location to the second geographical location; then collect, in the first time period, movement speeds of the user in the horizontal direction, and determine, based on a movement speed change of the user in the horizontal direction, the second time period from a moment at which the user departs from the first geographical location to a moment at which the bus begins to move after the user takes the bus; then collect a plurality of geographical locations of the user in the second time period; and finally perform clustering on the plurality of geographical locations to determine the geographical location whose collection quantity meets the condition, and use the geographical location whose collection quantity meets the condition as the geographical location at which the user takes the bus. In actual application, the second time period is a time period from a moment at which the user departs from the first geographical location to a moment at which the bus begins to start after the user gets on the bus, and the user usually stays for a longest time in this time period. Therefore, a bus stop whose collection quantity meets the stay duration may be obtained after the clustering is performed on user geographical locations collected in the second time period, and the bus stop is the geographical location at which the user takes the bus. The foregoing whole process is automatically performed by the terminal, and therefore, the terminal may automatically determine, by using the method of this application, the geographical location at which the user takes the bus, and the user does not need to manually input the bus taking geographical location. This improves efficiency of the user in determining bus trip information.

### BRIEF DESCRIPTION OF DRAWINGS

FIG. 1 is a schematic diagram of an application scenario according to an embodiment of this application;
FIG. 2 is a schematic diagram of a neural network according to an embodiment of this application;
FIG. 3 is a schematic diagram of bus trip information according to an embodiment of this application;
FIG. 4 is a schematic diagram of bus driving information according to an embodiment of this application;
FIG. 5 is a schematic flowchart of a method for determining a geographical location for a user to take bus according to an embodiment of this application;
FIG. 6 is a schematic structural diagram of a device for determining a geographical location for a user to take bus according to an embodiment of this application;
FIG. 7a is a schematic diagram of a human-computer interaction interface according to an embodiment of this application;
FIG. 7b is another schematic diagram of a human-computer interaction interface according to an embodiment of this application;
FIG. 8a is still another schematic diagram of a human-computer interaction interface according to an embodiment of this application;
FIG. 8b is yet another schematic diagram of a human-computer interaction interface according to an embodiment of this application; and
FIG. 9 is a schematic structural diagram of an apparatus for determining a geographical location for a user to take bus according to an embodiment of this application.

### DESCRIPTION OF EMBODIMENTS

The following further describes the embodiments of this application in detail with reference to the accompanying drawings.

This application provides a method and a device for determining a geographical location for a user to take a bus, which are mainly applied to a user commuting process.

First, an application scenario of this application is described.

In the prior art, when people select to take a bus when getting on/off duty, one inevitable problem is: People may need to wait for a bus for a long time at a bus stop. However, some real time bus query software in the prior art may resolve this problem. After inputting a start bus stop and a destination bus stop in the real time bus query software, the user may query how long a bus meeting the foregoing two conditions will arrive at the start bus stop, so that the user may select a proper time point for departing from home or the company and does not need to wait for the bus at the bus stop for a long time.

It may be learned from the foregoing description that when using the real time bus query software in the prior art, the user does not need to wait for the bus at the bus stop for a long time, but the user still needs to manually input the start bus stop and the destination bus stop. Operations are still relatively complex for the user, and consequently, efficiency of the user in querying bus information is low.

### Embodiment 1

Based on the foregoing application scenario, this application provides a method for determining a geographical location for a user to take a bus. A terminal may automatically determine the geographical location for a user to take bus by using the method, so as to push, to the user based on the geographical location, corresponding bus information and information about a moment at which each bus arrives at the geographical location, and the user does not need to manually input a bus stop. This is convenient for the user during use, and improves efficiency of querying bus information by the user.

A principle of this application is described first. First, the terminal determines, based on a geographical location of the user, a trip time period of the user in everyday commuting process, that is, a time period from a moment at which the user departs from home to a moment at which the user arrives at a company, or from a moment at which the user departs from the company to a moment at which the user arrives at home (for ease of description, the trip time period is referred to as a first time period). Then, in the first time period, a time period from a moment at which the user departs from home/the company to a moment at which the user gets on the bus (for ease of description, the time period from a moment at which the user departs from home/the company to a moment at which the user gets on the bus is referred to as a second time period) is determined by monitoring a user movement acceleration. In the second time period, the user may depart from home to take the bus, and the user usually needs to wait for the bus at a bus stop. Therefore, normally, a geographical location at which the user stays for a longest time in the second time period should be the bus stop. Based on the principle, in this application, geographical locations of the user are intensively collected in the second time period and are then clustered, and a geographical location obtained after the clustering is used as the geographical location at which the user takes the bus. In a process of the location clustering, all collected geographical locations in the second time period are analyzed to obtain a collection point corresponding to each geographical location, and a geographical location with a maximum quantity of collection points is used as a result of the location clustering.

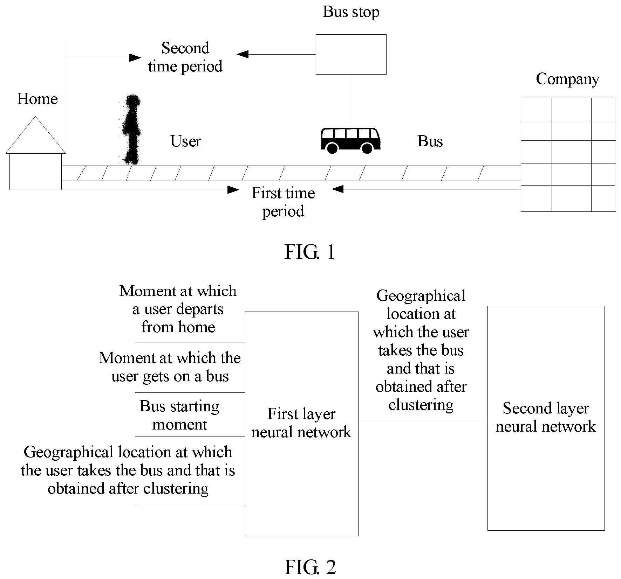

The method provided in this application may be specifically applied to a commuting process when the user gets on/off duty. The method for determining the geographical location for a user to take bus when the user gets on duty is similar to the method for determining the geographical location for a user to take bus when the user gets off duty. Therefore, specifically, as shown in FIG. 1, determining the geographical location for a user to take bus when the user gets on duty is used as an example in this application to describe, in detail, the process of this application:
First, the terminal determines the first time period of a trip when the user gets on duty, and the first time period may be specifically a time period from a moment at which the user departs from home and a moment at which the user arrives at the company.

In this embodiment of this application, it is assumed that a user A probably departs from home at 6 o'clock every morning and arrives at the company at 7 o'clock. Therefore, 6 o'clock to 7 o'clock is the first time period of a trip of the user A, and an implementation principle may be specifically as follows: The terminal may use a positioning function, such as the Global Positioning System (Global Positioning System, GPS) or the BeiDou Navigation Satellite System, to collect geographical locations of the user from Monday to Friday; and then the terminal analyzes that the user is at a fixed geographical location of "home" before 6 o'clock and at a fixed geographical location of "company" after 7 o'clock. Therefore, it may be determined that the trip time period of the user is 6 o'clock to 7 o'clock.

Then, the terminal determines, in the first trip time period, a second time period from a moment at which the user departs from home to a moment at which the bus begins to move after the user gets on the bus.

In actual application, an acceleration sensor is installed in most terminals, and accelerations of the user in a horizontal direction and a vertical direction may be collected by using the acceleration sensor. However, the acceleration of the user in the horizontal direction changes constantly and subtly in a process in which the user walks from home to the bus stop. Therefore, in this embodiment of this application, the terminal may constantly detect, in the pre-obtained first trip time period, the acceleration of the user in the horizontal direction by using the acceleration sensor. When it is determined that the acceleration of the user in the horizontal direction changes constantly and subtly, it is considered that the user departs from home at this moment, and the moment is recorded as a moment at which the user departs from home. At this moment, the user may depart from home, walk to the bus stop, and wait for the bus. When the bus is coming, the user gets on the bus, and the bus is started. When the bus is started, the acceleration of the user in the horizontal direction may be increased greatly, and when the terminal detects that the acceleration of the user in the horizontal direction increases suddenly, it may be determined that this moment is the moment at which the bus is started after the user gets on the bus, and the moment is recorded as the bus starting moment. In this embodiment of this application, the second time period may be specifically a time period from the moment at which the user departs from home to the bus starting moment.

Then, the terminal intensively collects geographical locations of the user in the second time period.

In this embodiment of this application, in the first time period in which the user trip is determined, the terminal may roughly collect geographical locations of the user. However, in the second time period, the terminal may intensively collect geographical locations of the user. A collection cycle of the intensive collection is much shorter than a collection cycle of the rough collection. For example, the collection cycle of the intensive collection may be 1 ms, that is, the terminal collects the geographical location of the user every 1 ms, and the collection cycle of the rough collection may be 10s, that is, the terminal collects the geographical location of the user every 10s.

Then, the terminal clusters geographical locations collected in the second time period, and uses the geographical location that is obtained after the clustering as the geographical location at which the user takes the bus.

In the second time period, the intensive collection is performed on the geographical location of the user based on a cycle, that is, a corresponding geographical location of the user may be collected after a time period. Generally, in the second time period, a place in which the user stays for a longest time is the bus stop, that is, there are a maximum quantity of collection points near the bus stop. In this case, the point with the maximum quantity of collection points may be used as the geographical location at which the user takes the bus.

Further, in actual application, in the second time period in which the user departs from home, gets on the bus, and the bus is started, the user may stay for a long time at another geographical location in addition to staying for a long time at the bus stop. For example, the user first buys a breakfast in a breakfast selling place after departing from home, and then goes to the bus stop to wait for the bus. Therefore, the user stays for a long time in the breakfast selling place in addition to staying for a long time at the bus stop. Therefore, a plurality of geographical locations may be obtained after the clustering if the foregoing location clustering manner is directly used to determine the geographical location at which the user takes the bus. Based on this, in this embodiment of this application, a weight greater than a weight of any other geographical location may be assigned to the geographical location at which the user takes the bus. When the terminal obtains the plurality of geographical locations after the clustering, a geographical location with a greater weight may be specifically used as the geographical location at which the user takes the bus.

The applicant finds, based on a research, that when the user gets on the bus, the acceleration of the user in the vertical direction may be greatly increased compared with that when the user walks. Therefore, in this embodiment of this application, the terminal may use the acceleration sensor in the second time period to detect the acceleration of the user in the vertical direction. When the terminal detects that the acceleration of the user in the vertical direction is greatly increased, it may be determined that user is getting on the bus at this moment. In this case, a weight greater than a preset value is assigned to the geographical location, and the preset value is assigned to other collected geographical locations. When the terminal performs location clustering on the geographical locations collected in the second time period, if it is found that the terminal may obtain a plurality of geographical locations after the clustering, a geographical location with a greater weight may be specifically used as the user trip geographical location.

Still further, in actual application, because of high randomicity of a trip of the user, if the foregoing method is used, that is, trip information of the geographical location is recommended to the user on a next day directly based on the geographical location determined based on the first-day trip of the user, accuracy is relatively low. For example, the user lives in a friend's home on Monday, and the terminal may determine that the bus taking geographical location of the user is a bus stop A of the friend's home. The user comes back home on Tuesday, and in this case, if trip information is recommended again based on the bus stop A near the friend's home that is determined on Monday to the user departing from home of the user, user experience may be relatively poor.

Based on this, in this embodiment of this application, after the bus taking geographical location of the user is determined every day, the geographical location is not directly output, that is, the geographical location is not directly used to recommend the trip information to the user. The bus taking geographical location determined every day is input into a preset neural network, so as to determine whether the bus taking geographical location of the user follows a rule. If the bus taking geographical location of the user follows the rule, the geographical location is output, that is, the trip information is recommended to the user based on the bus taking geographical location.

Specifically, in this embodiment of this application, as shown in FIG. 2, the provided neural network may be specifically divided into two layers. Input content at the first layer includes a moment at which the user departs from home, a moment at which the user gets on the bus, a moment at which the bus starts after the user gets on the bus, and a geographical location for a user to take bus obtained after the clustering that are determined by the terminal. The first layer is mainly used to determine whether the moment at which the user departs from home, the moment at which the user gets on the bus, and the moment at which the bus starts after the user gets on the bus that are determined currently meet a specific rule compared with the foregoing moments determined before. If the currently determined moments meet the rule, the geographical location at which the user takes the bus and that is currently obtained after the clustering is input into the second layer. At the second layer, the current geographical location at which the user takes the bus is compared with the geographical location obtained after the clustering before, to determine whether the current geographical location at which the user takes the bus meets a specific rule. Rule determining of the first layer neural network may be specifically: a difference between the departure moment of the user, the moment at which the user gets on the bus, and the moment at which the bus starts after the user gets on the bus that are collected currently and the foregoing several moments collected before exceeds a preset value. If the difference does not exceed the preset value, it may be considered that the foregoing several moments collected currently meet the specific rule. Rule determining of the second layer neural network may be specifically: a difference between the geographical location at which the user takes the bus and that is obtained currently after the clustering and the geographical location at which the user takes the bus and that is obtained after the clustering before exceeds a preset value; and if the difference does not exceed the preset value, it indicates that the bus taking geographical location that is obtained currently after the clustering follows the rule.

It should be noted that, in this embodiment of this application, if the first layer neural network determines that the foregoing several pieces of time information that are input on a day do not follow a rule compared with time information that is input before, geographical location information that is obtained currently after the clustering is not input into the second layer neural network. For example, if the first layer neural network determines that a difference between the foregoing several pieces of user trip time information that are input on Tuesday and user trip time information that is input before is relatively large, the geographical location information that is obtained on Tuesday after the clustering is not input into the second layer neural network to determine whether the geographical location information follows the rule. Incorrect determining of the geographical location for a user to take bus in a special case may be avoided by using the foregoing method, for example, an impact of a case in which the user suddenly comes back to hometown on a weekday, which leads to change of the geographical location that is obtained after the clustering is performed on the geographical location at which the user takes the bus, on a normal weekday.

In this embodiment of this application, trip information may be pushed to the user by using the geographical location for a user to take bus that is output by the foregoing neural network. Specifically, there are two specific scenarios in which the terminal pushes the bus trip information:
Scenario 1: On weekdays from Monday to Friday, the terminal pushes the trip information to the user in preset duration before the user trip time period. For example, if the terminal determines that the user gets on duty in a time period from 6 o'clock to 8 o'clock, the terminal may specifically push bus trip information to the user 15 minutes before 6 o'clock of the daily trip time point of the user.

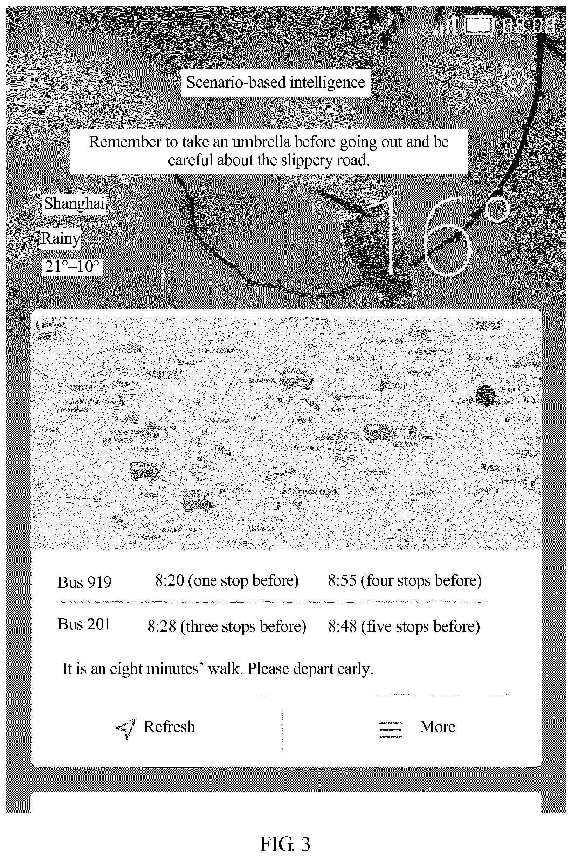

As shown in FIG. 3, the pushed trip information may specifically include a current weather condition, information about all buses passing by the current bus stop, information about a moment at which each bus arrives at the current bus stop (for example, how many stops before a bus arrives at the current bus stop, or how long before a bus arrives at the current bus stop), and information about reminding the user of a trip. The information about reminding the user of a trip may be specifically reminding the user of how long it will approximately take from the current location to the bus stop.

It should be noted that, in this embodiment of this application, originally generated push information may specifically include information about all buses passing by the current bus stop. However, in the original push information, if it is found that the user taps information about only one specific bus stop for viewing, the terminal may consider that the user takes only the bus viewed by the user, and only information about the bus viewed by the user may be pushed in subsequent push information. For example, the geographical location for a user to take bus that is output by the terminal neural network is the Shanghai Pudong bus stop, and buses passing by the Shanghai Pudong bus stop include a bus 211, a bus 222, a bus 223, and a bus 224. The originally generated push information of the terminal may specifically include information about a moment at which each bus arrives at the Shanghai Pudong bus stop. If it is found by the terminal that the user triggers information about only the bus 221 for viewing, only information about a moment at which the bus 221 arrives at the Shanghai Pudong bus stop may be pushed in the subsequent generated push information.

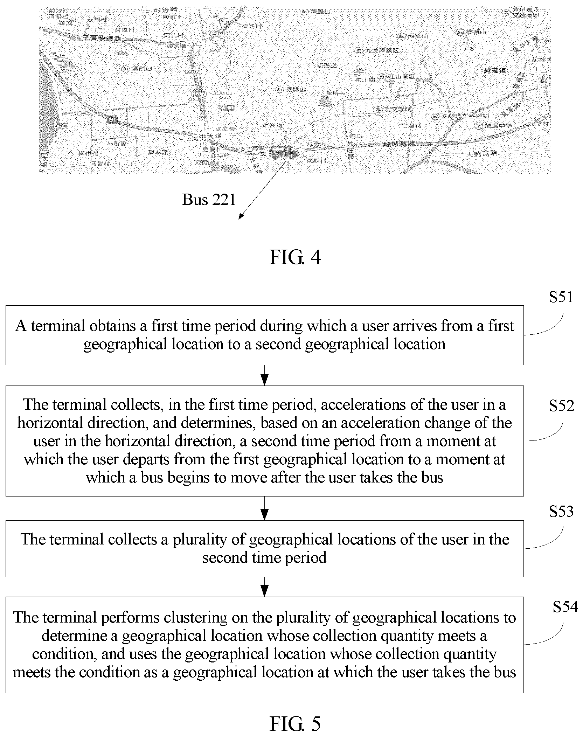

More specifically, in this embodiment of this application, if the user needs to specifically view driving information of a bus in the push information, that is, viewing information such as a current geographical location of the bus and a congestion condition of a road on which the bus is driven, the user may specifically perform a trigger operation on an icon of the bus in the trip information. When detecting the trigger operation, the terminal may specifically display the driving information of the bus. For example, if the user needs to view driving information of the bus 221, the user may specifically perform the trigger operation on an icon of the bus 221 in the trip information, and the terminal may display detailed driving information of the bus 221. The displayed driving information of the bus 221 may be specifically shown in FIG. 4.

Scenario 2: When the terminal detects that the user stops at the current bus stop for a long time, the foregoing trip information is pushed to a display interface, so that it is convenient for the user to obtain the driving information of the bus and avoid waiting anxiously for a long time of the user.

It may be learned from the foregoing that in the method disclosed in this embodiment of this application, the user may obtain the bus trip information with no need to install real time bus query software in the terminal, and the user does not need to manually input bus stop information. Compared with a manner of using bus trip software in the prior art to query the bus trip information, user operations may be reduced, and efficiency of the user in querying bus information can be improved.

### Embodiment 2

Same as the foregoing embodiment, this application further provides another embodiment implementing a method for determining a geographical location for a user to take a bus. The method may be specifically applied to a commuting process when the user gets on/off duty. As shown in FIG. 5, the method is specifically as follows.

Step S51: A terminal obtains a first time period during which a user arrives from a first geographical location to a second geographical location.

In this embodiment of this application, in a commuting process when a user gets on duty, the first geographical location may be specifically a geographical location of a "home" of the user, and the second geographical location may be specifically a geographical location of a "company" of the user; and in a commuting process when the user gets off duty, the first geographical location may be specifically the geographical location of the "company" of the user, and the second geographical location may be specifically the geographical location of the "home" of the user.

In this embodiment of this application, the first time period may be obtained in the following two modes:
1. The terminal may obtain, by using a geographical location positioning function of the terminal (for example, the foregoing GPS or BeiDou Navigation Satellite System), a time period during which the user arrives from the first geographical location to the second geographical location as the first time period. For details about the manner, refer to the foregoing description of Embodiment 1, and details are not described herein again.
2. The user may alternatively separately input a moment at which the user departs from the first geographical location and a moment at which the user arrives at the second geographical location into the terminal. The terminal obtains the first time period based on the moment at which the user departs from the first geographical location and the moment at which the user arrives at the second geographical location that are input by the user. For example, if the moment at which the user departs from the first geographical location and that is input by the user is 6:00 am, and the moment at which the user arrives at the second geographical location and that is input by the user is 8:00 am, the first time period is 6:00 am to 8:00 am.

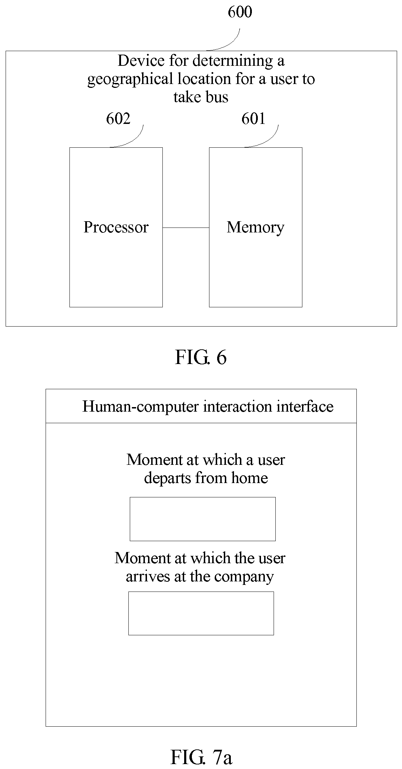

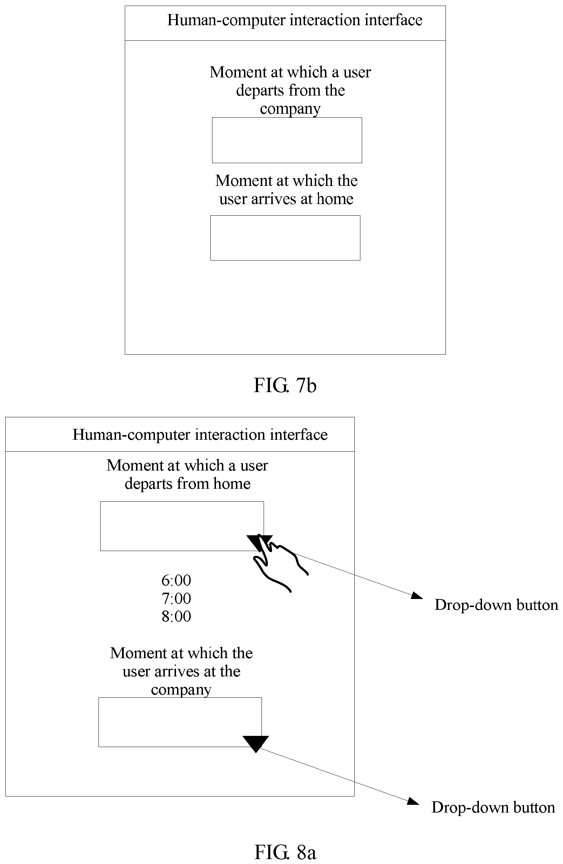

Specifically, the user may specifically use the following manner to input the moment at which the user departs from the first geographical location and the moment at which the user arrives at the second geographical location. For example, a human-computer interaction interface may pop up on the terminal. The interface may specifically include two input boxes: One input box is corresponding to the moment at which the user departs from the first location, and the other input box is corresponding to the moment at which the user arrives at the second location. The user may input corresponding moments in the input boxes. For example, if the foregoing first geographical location is a geographical location of the user's home, and the second geographical location is a geographical location of the user's company, the human-computer interaction interface displayed in the foregoing terminal may be specifically shown in FIG. 7a; or if the foregoing first geographical location is the geographical location of the user's company, and the second geographical location is the geographical location of the user's home, the human-computer interaction interface displayed in the terminal may be specifically shown in FIG. 7b.

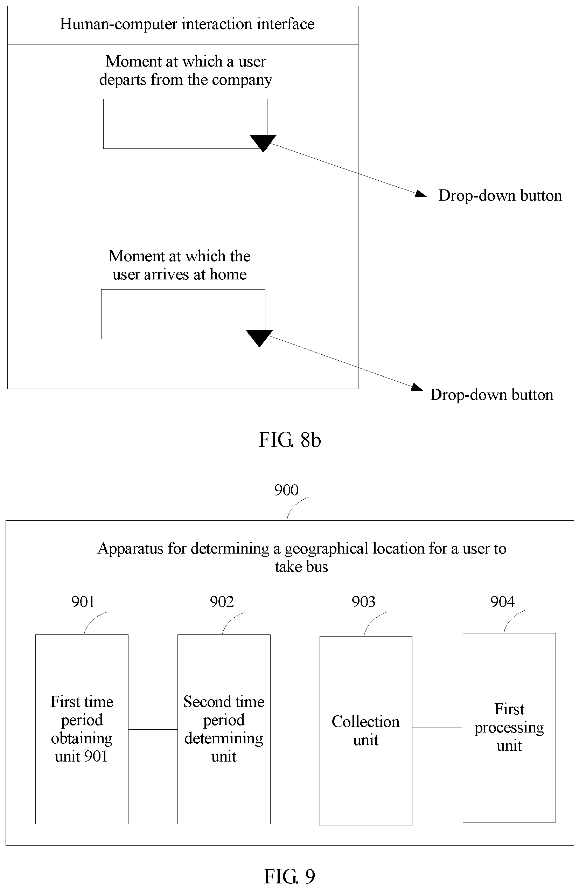

For another example, specifically, the human-computer interaction interface of the terminal further includes two selection boxes: One selection box is corresponding to the moment at which the user departs from the first geographical location, and the other selection is corresponding to the moment at which the user arrives at the second geographical location. The moment at which the user departs from the first geographical location and the moment at which the user arrives at the second geographical location may be separately selected by using a drop-down button of the selection box. When the first geographical location is the geographical location of the user's home, and the second geographical location is the geographical location of the user's company, the human-computer interaction interface displayed in the foregoing terminal may be specifically shown in FIG. 8a; or when the first geographical location is the geographical location of the user's company, and the second geographical location is the geographical location of the user's home, the human-computer interaction interface displayed in the terminal may be specifically shown in FIG. 8b. In this embodiment of this application, specifically, a plurality of time information may appear after the user taps the drop-down button on the human-computer interaction interface. The user may perform selection in the plurality of time information. For a specific operation process, refer to FIG. 8a.

Certainly, in this embodiment of this application, specifically, there are various specific manners in which the user inputs the moment at which the user departs from the first geographical location and the moment at which the user arrives at the second geographical location. FIG. 7a/b and FIG. 8a/b are merely examples of two manners, and other manners shall also fall within the protection scope of this application.

Step S52: The terminal collects, in the first time period, accelerations of the user in a horizontal direction, and determines, based on an acceleration change of the user in the horizontal direction, a second time period from a moment at which the user departs from the first geographical location to a moment at which a bus begins to move after the user takes the bus.

Step S53: The terminal collects a plurality of geographical locations of the user in the second time period.

Step S54: The terminal performs clustering on the plurality of geographical locations to determine a geographical location whose collection quantity meets a condition, and uses the geographical location whose collection quantity meets the condition as a geographical location at which the user takes the bus; where the geographical location whose collection quantity meets the condition may be specifically a geographical location with a maximum quantity of collection points in collection points of the plurality of geographical locations.

Further, in actual implementation, in the second time period, the user may stay at another place (for example, a breakfast selling place) in addition to the bus stop, and therefore, a plurality of geographical locations may be obtained after the clustering by using the foregoing method. In this case, this application may perform the following processing: collecting, by the terminal in the first time period, accelerations of the user in a vertical direction, and determining, based on an acceleration change of the user in the vertical direction, a first moment at which the user gets on the bus; setting, by the terminal, a first weight for a third geographical location collected at the first moment; and setting, by the terminal, a second weight for remaining geographical locations collected in the second time period other than the third geographical location, where the first weight is greater than the second weight. When the plurality of geographical locations that are obtained after the clustering meet the condition, the terminal may use a geographical location with a maximum weight as the geographical location at which the user takes the bus. The geographical location for a user to take bus may be determined more accurately by using the foregoing method.

Still further, in actual application, because of high randomicity of a trip of the user, if the geographical location obtained after the clustering is directly used to push trip information to the user, accuracy is extremely low. Therefore, in this embodiment of this application, after the foregoing geographical location is obtained after the clustering, a start moment of the second time period, an end moment of the second time period, and the first moment at which the user gets on the bus may be specifically input into a preset neural network (the neural network may be specifically shown in FIG. 2). The neural network is used to determine whether the start moment of the second time period, the end moment of the second time period, and the first moment at which the user gets on the bus meet a first preset rule. The first rule may be specifically: whether a difference between the foregoing several pieces of time information that are input currently (that is, the start moment of the second time period, the end moment of the second time period, and the first moment at which the user gets on the bus) and the foregoing several pieces of time information that are input before is within a preset threshold range. If the difference is within the preset threshold range, it may be considered that the foregoing several time information follows a rule, and the geographical location at which the user takes the bus and that is obtained after the clustering is input into a second layer of the neural network to determine whether the geographical location at which the user takes the bus and that is obtained currently after the clustering meets a second preset rule. The second rule may be specifically: whether a difference between the geographical location at which the user takes the bus and that is obtained currently after the clustering and the geographical location at which the user takes the bus and that is obtained after the clustering before is within a preset threshold range. If the difference is within the preset threshold range, it is considered that the geographical location for a user to take bus that is obtained after the clustering follows the rule. The trip information is generated to the user based on the geographical location for a user to take bus that is obtained currently after the clustering, and the terminal displays or broadcasts the trip information of the user. In this embodiment of this application, the terminal may further generate a card including the trip information, and directly display the card. The trip information includes at least information about a bus passing by the geographical location at which the user takes the bus and information about a moment at which the bus arrives at the geographical location at which the user takes the bus. For details about the card including the trip information that is displayed on the terminal, refer to FIG. 3.

When detecting that a bus in the trip information receives a trigger operation, the terminal displays or broadcasts driving information of the triggered bus, where the driving information may specifically include a congestion condition of a road on which the triggered bus is driven. For details about the displayed driving information, refer to FIG. 4.

It may be learned from the foregoing that, in this embodiment of this application, the terminal may automatically obtain the first time period during which the user arrives from the first geographical location to the second geographical location; then collect, in the first time period, movement speeds of the user in the horizontal direction, and determine, based on a movement speed change of the user in the horizontal direction, the second time period from a moment at which the user departs from the first geographical location to a moment at which the bus begins to move after the user takes the bus; then collect a plurality of geographical locations of the user in the second time period; and finally perform clustering on the plurality of geographical locations to determine the geographical location whose collection quantity meets the condition, and use the geographical location whose collection quantity meets the condition as the geographical location at which the user takes the bus. In actual application, the second time period is a time period from a moment at which the user departs from the first geographical location to a moment at which the bus begins to start after the user gets on the bus, and the user usually stays for a longest time in this time period. Therefore, a bus stop whose collection quantity meets the stay duration may be obtained after the clustering is performed on user geographical locations collected in the second time period, and the bus stop is the geographical location at which the user takes the bus. The foregoing whole process is automatically performed by the terminal, and therefore, the terminal may automatically determine, by using the method of this application, the geographical location at which the user takes the bus, and the user does not need to manually input the bus taking geographical location. This improves efficiency of the user in determining bus trip information.

### Embodiment 3

Same as the foregoing embodiment, as shown in FIG. 6, this application further provides a device 600 for determining a geographical location for a user to take bus.

The device 600 may be configured to perform the method disclosed in Embodiment 1 or Embodiment 2. The device 600 may implement, by using hardware, software, or a combination of the software and the hardware, the method disclosed in the foregoing Embodiment 1 or Embodiment 2. For details about a process of implementing the foregoing method, refer to the description of the foregoing Embodiment 1 or Embodiment 2, and details are not described herein again.

The device includes a memory 601 and a processor 602.

The processor 602 is configured to read code in the memory 601 to perform:
obtaining a first time period during which a user arrives from a first geographical location to a second geographical location; collecting, in the first time period, accelerations of the user in a horizontal direction, and determining, based on an acceleration change of the user in the horizontal direction, a second time period from a moment at which the user departs from the first geographical location to a moment at which a bus begins to move after the user takes the bus; collecting a plurality of geographical locations of the user in the second time period and performing clustering on the plurality of geographical locations to determine a geographical location whose collection quantity meets a condition, and using the geographical location whose collection quantity meets the condition as a geographical location at which the user takes the bus; where the first time period is pre-determined based on geographical location information of the user.

Specifically, the processor 602 is further configured to: collect, in the first time period, accelerations of the user in a vertical direction, and determine, based on an acceleration change of the user in the vertical direction, a first moment at which the user gets on the bus; set a first weight for a third geographical location collected at the first moment; and set a second weight for remaining geographical locations collected in the second time period other than the third geographical location, where the first weight is greater than the second weight.

Specifically, when there are a plurality of geographical locations whose collection quantities meet the condition, and the geographical location whose collection quantity meets the condition is used as the geographical location at which the user takes the bus, the processor 602 is specifically configured to: obtain a weight of each geographical location whose collection quantity meets the condition; and use a geographical location with a maximum weight as the geographical location at which the user takes the bus.

Specifically, the processor 602 is further configured to: determine whether a start moment of the second time period, an end moment of the second time period, and the first moment at which the user gets on the bus meet a first preset rule; after it is determined that the start moment of the second time period, the end moment of the second time period, and the first moment at which the user gets on the bus meet the first preset rule, determine whether the geographical location that is obtained after the current clustering and at which the user takes the bus meets a second preset rule; and after it is determined that the geographical location that is obtained after the current clustering and at which the user takes the bus meets the second preset rule, push trip information to the user based on the geographical location that is obtained after the current clustering and at which the user takes the bus, where the trip information includes at least information about a bus passing by the geographical location at which the user takes the bus and information about a moment at which the bus arrives at the geographical location at which the user takes the bus.

Specifically, the terminal further includes a display and a player, and the processor 602 is further configured to: display the trip information on the display; or play the trip information by using the player; or display a card including the trip information. More specifically, the processor 602 is further configured to: when it is detected that a bus in the displayed trip information receives a trigger operation, display driving information of the triggered bus by using the display, or play the driving information of the triggered bus by using the player, where the driving information includes at least congestion information of a road on which the triggered bus is driven.

It may be learned from the foregoing that, in this embodiment of this application, the terminal may automatically obtain the first time period during which the user arrives from the first geographical location to the second geographical location; then collect, in the first time period, movement speeds of the user in the horizontal direction, and determine, based on a movement speed change of the user in the horizontal direction, the second time period from a moment at which the user departs from the first geographical location to a moment at which the bus begins to move after the user takes the bus; then collect a plurality of geographical locations of the user in the second time period; and finally perform clustering on the plurality of geographical locations to determine the geographical location whose collection quantity meets the condition, and use the geographical location whose collection quantity meets the condition as the geographical location at which the user takes the bus. In actual application, the second time period is a time period from a moment at which the user departs from the first geographical location to a moment at which the bus begins to start after the user gets on the bus, and the user usually stays for a longest time in this time period. Therefore, a bus stop whose collection quantity meets the stay duration may be obtained after the clustering is performed on user geographical locations collected in the second time period, and the bus stop is the geographical location at which the user takes the bus. The foregoing whole process is automatically performed by the terminal, and therefore, the terminal may automatically determine, by using the method of this application, the geographical location at which the user takes the bus, and the user does not need to manually input the bus taking geographical location. This improves efficiency of the user in determining bus trip information.

### Embodiment 4

Same as the foregoing conception, as shown in FIG. 9, this application further provides an apparatus 900 for determining a geographical location for a user to take bus. The apparatus 900 may be configured as a physical or function module that performs the method disclosed in the foregoing Embodiment 1 or Embodiment 2, and the function module that is configured to perform the method may be implemented by using hardware, software, or a combination of the software and the hardware. For a specific process of the execution method of the apparatus 900, refer to the foregoing description of Embodiment 1 or Embodiment 2, and details are not described herein again. The apparatus 900 may specifically include:
a first time period obtaining unit 901, configured to obtain a first time period during which a user arrives from a first geographical location to a second geographical location;
a second time period determining unit 902, configured to: collect, in the first time period, accelerations of the user in a horizontal direction, and determine, based on an acceleration change of the user in the horizontal direction, a second time period from a moment at which the user departs from the first geographical location to a moment at which a bus begins to move after the user takes the bus;
a collection unit 903, configured to collect a plurality of geographical locations of the user in the second time period; and
a first processing unit 904, configured to: perform clustering on the plurality of geographical locations to determine a geographical location whose collection quantity meets a condition, and use the geographical location whose collection quantity meets the condition as a geographical location at which the user takes the bus.

Specifically, the apparatus further includes a second processing unit, configured to: collect, in the first time period, accelerations of the user in a vertical direction, and determine, based on an acceleration change of the user in the vertical direction, a first moment at which the user gets on the bus; set a first weight for a third geographical location collected at the first moment; and set a second weight for remaining geographical locations collected in the second time period other than the third geographical location, where the first weight is greater than the second weight. Specifically, when there are a plurality of geographical locations whose collection quantities meet the condition, and the geographical location whose collection quantity meets the condition is used as the geographical location at which the user takes the bus, the first processing unit is specifically configured to: obtain a weight of each geographical location whose collection quantity meets the condition; and use a geographical location with a maximum weight as the geographical location at which the user takes the bus.

Specifically, the apparatus further includes a third processing unit, configured to: determine whether a start moment of the second time period, an end moment of the second time period, and the first moment at which the user gets on the bus meet a first preset rule; after it is determined that the start moment of the second time period, the end moment of the second time period, and the first moment at which the user gets on the bus meet the first preset rule, determine whether the geographical location that is obtained after the current clustering and at which the user takes the bus meets a second preset rule; and after it is determined that the geographical location that is obtained after the current clustering and at which the user takes the bus meets the second preset rule, push trip information to the user based on the geographical location that is obtained after the current clustering and at which the user takes the bus, where the trip information includes at least information about a bus passing by the geographical location at which the user takes the bus and information about a moment at which the bus arrives at the geographical location at which the user takes the bus. Specifically, the apparatus may further include at least one of a display unit and a broadcast unit, where the display unit is configured to display the trip information or display a card including the trip information; and the broadcast unit is configured to broadcast the trip information.

Specifically, the display unit is further configured to: when it is detected that a bus in the displayed trip information receives a trigger operation, display driving information of the triggered bus, where the driving information includes at least congestion information of a road on which the triggered bus is driven; and the voice broadcast unit is further configured to broadcast the driving information.

It may be learned from the foregoing that, in this embodiment of this application, the terminal may automatically obtain the first time period during which the user arrives from the first geographical location to the second geographical location; then collect, in the first time period, movement speeds of the user in the horizontal direction, and determine, based on a movement speed change of the user in the horizontal direction, the second time period from a moment at which the user departs from the first geographical location to a moment at which the bus begins to move after the user takes the bus; then collect a plurality of geographical locations of the user in the second time period; and finally perform clustering on the plurality of geographical locations to determine the geographical location whose collection quantity meets the condition, and use the geographical location whose collection quantity meets the condition as the geographical location at which the user takes the bus. In actual application, the second time period is a time period from a moment at which the user departs from the first geographical location to a moment at which the bus begins to start after the user gets on the bus, and the user usually stays for a longest time in this time period. Therefore, a bus stop whose collection quantity meets the stay duration may be obtained after the clustering is performed on user geographical locations collected in the second time period, and the bus stop is the geographical location at which the user takes the bus. The foregoing whole process is automatically performed by the terminal, and therefore, the terminal may automatically determine, by using the method of this application, the geographical location at which the user takes the bus, and the user does not need to manually input the bus taking geographical location. This improves efficiency of the user in determining bus trip information.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the embodiments of this application without departing from the scope of the present invention as defined by the appended claims.

## Claims

1. A method for determining a geographical location for a user to take a bus, comprising:
obtaining (S51), by a terminal, a first time period from a moment at which a user departs from a first geographical location to a moment at which the user arrives at a second geographical location;
collecting (S52), by the terminal in the first time period, accelerations of the user in a horizontal direction, and determining a second time period, based on an acceleration change of the user in the horizontal direction, the second time period lasting from a moment at which the user departs from the first geographical location to a moment at which a bus begins to move after the user takes the bus;
collecting (S53), by the terminal, a plurality of geographical locations of the user in the second time period;
performing clustering (S54), by the terminal, on the plurality of geographical locations to determine a geographical location whose collection quantity meets a condition, and using the geographical location whose collection quantity meets the condition as a geographical location at which the user takes the bus, wherein all collected geographical locations in the second time period are analyzed to obtain a collection point corresponding to each geographical location, and a geographical location with a maximum quantity of collection points is used as a result of the location clustering;
**characterized in that** the method further comprises:
collecting, by the terminal in the first time period, accelerations of the user in a vertical direction, and determining, based on an acceleration change of the user in the vertical direction, a first moment at which the user gets on the bus;
setting, by the terminal, a first weight for a third geographical location collected at the first moment;
setting, by the terminal, a second weight for remaining geographical locations collected in the second time period other than the third geographical location, wherein the first weight is greater than the second weight;
determining, by the terminal, whether a start moment of the second time period, an end moment of the second time period, and the first moment at which the user gets on the bus meet a first preset rule;
after determining that the start moment of the second time period, the end moment of the second time period, and the first moment at which the user gets on the bus meet the first preset rule, determining, by the terminal, whether the geographical location that is obtained after the clustering and at which the user takes the bus meets a second preset rule; and
after determining that the geographical location that is obtained after the clustering and at which the user takes the bus meets the second preset rule, pushing, by the terminal, trip information to the user based on the geographical location that is obtained after the clustering and at which the user takes the bus, wherein the trip information comprises at least information about a bus passing by the geographical location at which the user takes the bus and information about a moment at which the bus arrives at the geographical location at which the user takes the bus.

2. The method according to claim 1, wherein when there are a plurality of geographical locations whose collection quantities meet the condition, the using, by the terminal, the geographical location whose collection quantity meets the condition as a geographical location at which the user takes the bus comprises:
obtaining, by the terminal, a weight of each geographical location whose collection quantity meets the condition; and
using, by the terminal, a geographical location with a maximum weight as the geographical location at which the user takes the bus.

3. The method according to claim 1, wherein the method further comprises:
displaying, by the terminal, the trip information; or
broadcasting, by the terminal, the trip information; or
displaying, by the terminal, a card comprising the trip information.

4. The method according to claim 3, wherein when the terminal displays the trip information, the method further comprises:
when detecting that a bus in the displayed trip information receives a trigger operation, displaying or broadcasting, by the terminal, driving information of the triggered bus, wherein the driving information comprises at least congestion information of a road on which the triggered bus is driven.

5. An apparatus (900) for determining a geographical location for a user to take a bus, wherein the apparatus comprises:
a first time period obtaining unit (901), configured to obtain a first time period from a moment at which a user departs from a first geographical location to a moment at which the user arrives at a second geographical location;
a second time period determining unit (902), configured to: collect, in the first time period, accelerations of the user in a horizontal direction, and determine a second time period, based on an acceleration change of the user in the horizontal direction, the second time period lasting from a moment at which the user departs from the first geographical location to a moment at which a bus begins to move after the user takes the bus;
a collection unit (903), configured to collect a plurality of geographical locations of the user in the second time period;
a first processing unit (904), configured to: perform clustering on the plurality of geographical locations to determine a geographical location whose collection quantity meets a condition, and use the geographical location whose collection quantity meets the condition as a geographical location at which the user takes the bus, wherein all collected geographical locations in the second time period are analyzed to obtain a collection point corresponding to each geographical location, and a geographical location with a maximum quantity of collection points is used as a result of the location clustering;
**characterized in that** the apparatus further comprises:
a second processing unit, configured to:
collect, in the first time period, accelerations of the user in a vertical direction, and determine, based on an acceleration change of the user in the vertical direction, a first moment at which the user gets on the bus;
set a first weight for a third geographical location collected at the first moment; and
set a second weight for remaining geographical locations collected in the second time period other than the third geographical location, wherein the first weight is greater than the second weight;
a third processing unit, configured to:
determine whether a start moment of the second time period, an end moment of the second time period, and the first moment at which the user gets on the bus meet a first preset rule;
after it is determined that the start moment of the second time period, the end moment of the second time period, and the first moment at which the user gets on the bus meet the first preset rule, determine whether the geographical location that is obtained after the clustering and at which the user takes the bus meets a second preset rule; and
after it is determined that the geographical location that is obtained after the clustering and at which the user takes the bus meets the second preset rule, push trip information to the user based on the geographical location that is obtained after the clustering and at which the user takes the bus, wherein the trip information comprises at least information about a bus passing by the geographical location at which the user takes the bus and information about a moment at which the bus arrives at the geographical location at which the user takes the bus.

6. The apparatus according to claim 5, wherein when there are a plurality of geographical locations whose collection quantities meet the condition, and the geographical location whose collection quantity meets the condition is used as the geographical location at which the user takes the bus, the first processing unit (904) is specifically configured to:
obtain a weight of each geographical location whose collection quantity meets the condition; and
use a geographical location with a maximum weight as the geographical location at which the user takes the bus.

7. The apparatus according to claim 5, wherein the apparatus further comprises at least one of a display unit and a broadcast unit:
the display unit is configured to: display the trip information or display a card comprising the trip information; and
the broadcast unit is configured to broadcast the trip information.

8. The apparatus according to claim 7, wherein the display unit is further configured to: when it is detected that a bus in the displayed trip information receives a trigger operation, display driving information of the triggered bus, wherein the driving information comprises at least congestion information of a road on which the triggered bus is driven; and
the voice broadcast unit is further configured to broadcast the driving information.

9. A computer-readable storage medium comprising instructions which, when executed by a computer, cause the computer to carry out the method of claims 1-4.

## Patentansprüche

1. Verfahren zum Bestimmen eines geografischen Standorts für einen Benutzer, der einen Bus nimmt, das umfasst:
Erhalten (S51), durch ein Terminal, eines ersten Zeitraums von einem Zeitpunkt, zu dem ein Benutzer einen ersten geografischen Standort verlässt, bis zu einem Zeitpunkt, zu dem der Benutzer an einem zweiten geografischen Standort ankommt;
Erfassen (S52), durch das Terminal in dem ersten Zeitraum, von Beschleunigungen des Benutzers in einer horizontalen Richtung und Bestimmen eines zweiten Zeitraums basierend auf einer Beschleunigungsänderung des Benutzers in der horizontalen Richtung, wobei der zweite Zeitraum von einem Zeitpunkt, zu dem der Benutzer den ersten geografischen Standort verlässt, bis zu einem Zeitpunkt dauert, zu dem sich ein Bus in Bewegung setzt, nachdem der Benutzer in den Bus eingestiegen ist;
Erfassen (S53), durch das Terminal, einer Vielzahl von geografischen Standorten des Benutzers in dem zweiten Zeitraum;
Durchführen einer Clusterung (S54), durch das Terminal, auf der Vielzahl von geografischen Standorten, um einen geografischen Standort zu bestimmen, dessen Erfassungsmenge eine Bedingung erfüllt, und Verwenden des geografischen Standorts, dessen Erfassungsmenge die Bedingung erfüllt, als einen geografischen Standort, an dem der Benutzer den Bus nimmt, wobei alle erfassten geografischen Standorte in dem zweiten Zeitraum analysiert werden, um einen Erfassungspunkt zu erhalten, der jedem geografischen Standort entspricht, und ein geografischer Standort mit einer maximalen Menge von Erfassungspunkten als ein Ergebnis der Standort-Clusterung verwendet wird;
**dadurch gekennzeichnet, dass** das Verfahren ferner umfasst:
Erfassen, durch das Terminal in dem ersten Zeitraum, von Beschleunigungen des Benutzers in einer vertikalen Richtung und Bestimmen, basierend auf einer Beschleunigungsänderung des Benutzers in der vertikalen Richtung, eines ersten Zeitpunkts, zu dem der Benutzer in den Bus einsteigt;
Festlegen, durch das Terminal, einer ersten Gewichtung für einen dritten geografischen Standort, der zu dem ersten Zeitpunkt erfasst wurde;
Festlegen, durch das Terminal, einer zweiten Gewichtung für die übrigen in dem zweiten Zeitraum erfassten geografischen Standorte mit Ausnahme des dritten geografischen Standorts, wobei die erste Gewichtung größer als die zweite Gewichtung ist;
Bestimmen, durch das Terminal, ob ein Startzeitpunkt des zweiten Zeitraums, ein Endzeitpunkt des zweiten Zeitraums und der erste Zeitpunkt, zu dem der Benutzer in den Bus steigt, eine erste voreingestellte Regel erfüllen;
nach dem Bestimmen, dass der Startzeitpunkt des zweiten Zeitraums, der Endzeitpunkt des zweiten Zeitraums und der erste Zeitpunkt, zu dem der Benutzer in den Bus steigt, die erste voreingestellte Regel erfüllen, Bestimmen, durch das Terminal, ob der geografische Standort, der nach der Clusterung erhalten wird und an dem der Benutzer den Bus nimmt, eine zweite voreingestellte Regel erfüllt; und nach dem Bestimmen, dass der geografische Standort, der nach der Clusterung erhalten wird und an dem der Benutzer den Bus nimmt, die zweite voreingestellte Regel erfüllt, Senden, durch das Terminal, von Reiseinformationen an den Benutzer basierend auf dem geografischen Standort, der nach der Clusterung erhalten wird und an dem der Benutzer den Bus nimmt, wobei die Reiseinformationen mindestens Informationen über einen Bus, der an dem geografischen Standort vorbeikommt, an dem der Benutzer den Bus nimmt, und Informationen über einen Zeitpunkt, zu dem der Bus an dem geografischen Standort ankommt, an dem der Benutzer den Bus nimmt, umfassen.

2. Verfahren nach Anspruch 1, wobei, wenn es eine Vielzahl von geografischen Standorten gibt, deren Erfassungsmengen die Bedingung erfüllen, das Verwenden, durch das Terminal, des geografischen Standorts, dessen Erfassungsmenge die Bedingung erfüllt, als einen geografischen Standort, an dem der Benutzer den Bus nimmt, umfasst:
Erhalten, durch das Terminal, einer Gewichtung jedes geografischen Standorts, dessen Erfassungsmenge die Bedingung erfüllt; und
Verwenden, durch das Terminal, eines geografischen Standorts mit einer maximalen Gewichtung als den geografischen Standort, an dem der Benutzer den Bus nimmt.

3. Verfahren nach Anspruch 1, wobei das Verfahren ferner umfasst:
Anzeigen, durch das Terminal, der Reiseinformationen; oder
Übertragen, durch das Terminal, der Reiseinformationen; oder
Anzeigen, durch das Terminal, einer Karte mit den Reiseinformationen.

4. Verfahren nach Anspruch 3, wobei, wenn das Terminal die Reiseinformationen anzeigt, das Verfahren ferner umfasst:
wenn erkannt wird, dass ein Bus in den angezeigten Reiseinformationen einen Auslösevorgang empfängt, Anzeigen oder Übertragen, durch das Terminal, von Fahrinformationen des ausgelösten Busses, wobei die Fahrinformationen mindestens Stauinformationen einer Straße, auf der der ausgelöste Bus gefahren wird, umfassen.

5. Einrichtung (900) zum Bestimmen eines geografischen Standorts für einen Benutzer, der einen Bus nimmt, wobei die Einrichtung umfasst:
eine Einheit (901) zum Erhalten des ersten Zeitraums, die konfiguriert ist, um einen ersten Zeitraum von einem Zeitpunkt, zu dem ein Benutzer einen ersten geografischen Standort verlässt, bis zu einem Zeitpunkt, zu dem der Benutzer an einem zweiten geografischen Standort ankommt, zu erhalten;
eine Einheit (902) zum Bestimmen eines zweiten Zeitraums, die konfiguriert ist zum:
Erfassen, in dem ersten Zeitraum, von Beschleunigungen des Benutzers in einer horizontalen Richtung, und Bestimmen eines zweiten Zeitraums basierend auf einer Beschleunigungsänderung des Benutzers in der horizontalen Richtung, wobei der zweite Zeitraum von einem Zeitpunkt, zu dem der Benutzer den ersten geografischen Standort verlässt, bis zu einem Zeitpunkt dauert, zu dem sich ein Bus in Bewegung setzt, nachdem der Benutzer in den Bus eingestiegen ist;
eine Erfassungseinheit (903), die konfiguriert ist, um eine Vielzahl von geografischen Standorten des Benutzers in dem zweiten Zeitraum zu erfassen;
eine erste Verarbeitungseinheit (904), die konfiguriert zum: Durchführen einer Clusterung der Vielzahl von geografischen Standorten, um einen geografischen Standort zu bestimmen, dessen Erfassungsmenge eine Bedingung erfüllt, und
Verwenden des geografischen Standorts, dessen Erfassungsmenge die Bedingung erfüllt, als einen geografischen Standort, an dem der Benutzer den Bus nimmt, wobei alle erfassten geografischen Standorte in dem zweiten Zeitraum analysiert werden, um einen Erfassungspunkt zu erhalten, der jedem geografischen Standort entspricht, und ein geografischer Standort mit einer maximalen Menge von Erfassungspunkten als ein Ergebnis der Standort-Clusterung verwendet wird;
**dadurch gekennzeichnet, dass** die Einrichtung ferner umfasst:
eine zweite Verarbeitungseinheit, die konfiguriert ist zum:
Erfassen, in dem ersten Zeitraum, von Beschleunigungen des Benutzers in einer vertikalen Richtung und Bestimmen, basierend auf einer Beschleunigungsänderung des Benutzers in der vertikalen Richtung, eines ersten Zeitpunkts, zu dem der Benutzer in den Bus einsteigt;
Festlegen einer ersten Gewichtung für einen dritten geografischen Standort, der zu dem ersten Zeitpunkt erfasst wurde; und
Festlegen einer zweiten Gewichtung für die übrigen in dem zweiten Zeitraum erfassten geografischen Standorte mit Ausnahme des dritten geografischen Standorts, wobei die erste Gewichtung größer als die zweite Gewichtung ist;
eine dritte Verarbeitungseinheit, die konfiguriert ist zum:
Bestimmen, ob ein Startzeitpunkt des zweiten Zeitraums, ein Endzeitpunkt des zweiten Zeitraums und der erste Zeitpunkt, zu dem der Benutzer in den Bus steigt,
eine erste voreingestellte Regel erfüllen;
nachdem bestimmt wurde, dass der Startzeitpunkt des zweiten Zeitraums, der Endzeitpunkt des zweiten Zeitraums und der erste Zeitpunkt, zu dem der Benutzer in den Bus steigt, die erste voreingestellte Regel erfüllen, Bestimmen, ob der geografische Standort, der nach der Clusterung erhalten wird und an dem der Benutzer den Bus nimmt, eine zweite voreingestellte Regel erfüllt; und
nachdem bestimmt wurde, dass der geografische Standort, der nach der Clusterung erhalten wird und an dem der Benutzer den Bus nimmt, die zweite voreingestellte Regel erfüllt, Senden von Reiseinformationen an den Benutzer basierend auf dem geografischen Standort, der nach der Clusterung erhalten wird und an dem der Benutzer den Bus nimmt, wobei die Reiseinformationen mindestens Informationen über einen Bus, der an dem geografischen Standort vorbeikommt, an dem der Benutzer den Bus nimmt, und Informationen über einen Zeitpunkt, zu dem der Bus an dem geografischen Standort ankommt, an dem der Benutzer den Bus nimmt, umfassen.

6. Einrichtung nach Anspruch 5, wobei, wenn es eine Vielzahl von geografischen Standorten gibt, deren Erfassungsmengen die Bedingung erfüllen, und der geografische Standort, dessen Erfassungsmenge die Bedingung erfüllt, als der geografische Standort verwendet wird, an dem der Benutzer den Bus nimmt, die erste Verarbeitungseinheit (904) speziell konfiguriert ist zum:
Erhalten einer Gewichtung jedes geografischen Standorts, dessen Erfassungsmenge die Bedingung erfüllt; und
Verwenden eines geografischen Standorts mit einer maximalen Gewichtung als den geografischen Standort, an dem der Benutzer den Bus nimmt.

7. Einrichtung nach Anspruch 5, wobei die Einrichtung ferner mindestens eines von einer Anzeigeeinheit und einer Übertragungseinheit umfasst:
die Anzeigeeinheit ist konfiguriert zum: Anzeigen der Reiseinformationen oder
Anzeigen einer Karte, die die Reiseinformationen umfasst; und
die Übertragungseinheit ist konfiguriert, um die Reiseinformationen zu übertragen.

8. Einrichtung nach Anspruch 7, wobei die Anzeigeeinheit ferner konfiguriert ist zum:
wenn erkannt wird, dass ein Bus in den angezeigten Reiseinformationen einen Auslösevorgang empfängt, Anzeigen von Fahrinformationen des ausgelösten Busses, wobei die Fahrinformationen mindestens Stauinformationen für eine Straße, auf der der ausgelöste Bus gefahren wird, umfassen; und
die Sprachübertragungseinheit ferner konfiguriert ist, um die Fahrinformationen zu übertragen.

9. Computerlesbares Speichermedium, das Anweisungen umfasst, die, wenn sie durch einen Computer ausgeführt werden, den Computer veranlassen, das Verfahren nach einem der Ansprüche 1 bis 4 auszuführen.

## Revendications

1. Procédé permettant de déterminer un emplacement géographique pour un utilisateur qui doit prendre un bus, comprenant :
l'obtention (S51), par un terminal, d'une première période de temps à partir d'un moment où un utilisateur part d'un premier emplacement géographique jusqu'à un moment où l'utilisateur arrive à un deuxième emplacement géographique ;
la collecte (S52), par le terminal au cours de la première période de temps, d'accélérations de l'utilisateur dans une direction horizontale, et la détermination d'une seconde période de temps, en fonction d'un changement d'accélération de l'utilisateur dans la direction horizontale, la seconde période de temps allant d'un moment où l'utilisateur part du premier emplacement géographique à un moment où un bus commence à se déplacer après que l'utilisateur a pris le bus ;
la collecte (S53), par le terminal, d'une pluralité d'emplacements géographiques de l'utilisateur au cours de la seconde période de temps ;
la réalisation d'un regroupement (S54), par le terminal, sur la pluralité d'emplacements géographiques pour déterminer un emplacement géographique dont la quantité de collecte satisfait à une condition, et l'utilisation de l'emplacement géographique dont la quantité de collecte satisfait à la condition comme un emplacement géographique où l'utilisateur prend le bus, dans lequel tous les emplacements géographiques collectés au cours de la seconde période de temps sont analysés pour obtenir un point de collecte correspondant à chaque emplacement géographique, et un emplacement géographique ayant une quantité maximale de points de collecte est utilisé à la suite du regroupement d'emplacements ;
**caractérisé en ce que** le procédé comprend en outre :
la collecte, par le terminal au cours de la première période de temps, d'accélérations de l'utilisateur dans une direction verticale, et la détermination, en fonction d'un changement d'accélération de l'utilisateur dans la direction verticale, d'un premier moment où l'utilisateur monte dans le bus ;
la définition, par le terminal, d'un premier poids pour un troisième emplacement géographique collecté au premier moment;
la définition, par le terminal, d'un second poids pour des emplacements géographiques restants collectés au cours de la seconde période de temps autres que le troisième emplacement géographique, dans lequel le premier poids est supérieur au second poids ;
le fait de déterminer, par le terminal, si un moment de début de la seconde période de temps, un moment de fin de la seconde période de temps, et le premier moment où l'utilisateur monte dans le bus satisfont à une première règle prédéfinie ;
après avoir déterminé que le moment de début de la seconde période de temps, le moment de fin de la seconde période de temps, et le premier moment où l'utilisateur monte dans le bus satisfont à la première règle prédéfinie, le fait de déterminer, par le terminal, si l'emplacement géographique qui est obtenu après le regroupement et où l'utilisateur prend le bus satisfait à une seconde règle prédéfinie ; et
après avoir déterminé que l'emplacement géographique qui est obtenu après le regroupement et où l'utilisateur prend le bus satisfait à la seconde règle prédéfinie, la poussée, par le terminal, d'informations de voyage à l'utilisateur en fonction de l'emplacement géographique qui est obtenu après le regroupement et où l'utilisateur prend le bus, dans lequel les informations de voyage comprennent au moins des informations concernant un bus passant par l'emplacement géographique où l'utilisateur prend le bus et des informations concernant un moment où le bus arrive à l'emplacement géographique où l'utilisateur prend le bus.

2. Procédé selon la revendication 1, dans lequel, lorsqu'il existe une pluralité d'emplacements géographiques dont les quantités de collecte satisfont à la condition, l'utilisation, par le terminal, de l'emplacement géographique dont la quantité de collecte satisfait à la condition comme un emplacement géographique où l'utilisateur prend le bus comprend :
l'obtention, par le terminal, d'un poids de chaque emplacement géographique dont la quantité de collecte satisfait à la condition ; et
l'utilisation, par le terminal, d'un emplacement géographique ayant un poids maximal comme l'emplacement géographique où l'utilisateur prend le bus.

3. Procédé selon la revendication 1, dans lequel le procédé comprend en outre :
l'affichage, par le terminal, des informations de voyage ; ou
la diffusion, par le terminal, des informations de voyage ; ou
l'affichage, par le terminal, d'une carte comprenant les informations de voyage.

4. Procédé selon la revendication 3, dans lequel, lorsque le terminal affiche les informations de voyage, le procédé comprend en outre :
lorsqu'il est détecté qu'un bus dans les informations de voyage affichées reçoit une opération de déclenchement, l'affichage ou la diffusion, par le terminal, d'informations de conduite du bus déclenché, dans lequel les informations de conduite comprennent au moins des informations de congestion d'une route sur laquelle le bus déclenché est conduit.

5. Appareil (900) permettant de déterminer un emplacement géographique pour un utilisateur qui doit prendre un bus, dans lequel l'appareil comprend :
une unité d'obtention de première période de temps (901), configurée pour obtenir une première période de temps à partir d'un moment où un utilisateur part d'un premier emplacement géographique jusqu'à un moment où l'utilisateur arrive à un deuxième emplacement géographique ;
une unité de détermination de seconde période de temps (902), configurée pour :
collecter, au cours de la première période de temps, des accélérations de l'utilisateur dans une direction horizontale, et déterminer une seconde période de temps, en fonction d'un changement d'accélération de l'utilisateur dans la direction horizontale, la seconde période de temps allant d'un moment où l'utilisateur part du premier emplacement géographique à un moment où un bus commence à se déplacer après que l'utilisateur a pris le bus ;
une unité de collecte (903), configurée pour collecter une pluralité d'emplacements géographiques de l'utilisateur au cours de la seconde période de temps ;
une première unité de traitement (904), configurée pour : réaliser un regroupement sur la pluralité d'emplacements géographiques afin de déterminer un emplacement géographique dont la quantité de collecte satisfait à une condition, et utiliser l'emplacement géographique dont la quantité de collecte satisfait à la condition comme un emplacement géographique où l'utilisateur prend le bus, dans lequel tous les emplacements géographiques collectés au cours de la seconde période de temps sont analysés pour obtenir un point de collecte correspondant à chaque emplacement géographique, et un emplacement géographique ayant une quantité maximale de points de collecte est utilisé à la suite du regroupement d'emplacements ;
**caractérisé en ce que** l'appareil comprend en outre :
une deuxième unité de traitement, configurée pour :
collecter, au cours de la première période de temps, des accélérations de l'utilisateur dans une direction verticale, et déterminer, en fonction d'un changement d'accélération de l'utilisateur dans la direction verticale, un premier moment où l'utilisateur monte dans le bus ;
définir un premier poids pour un troisième emplacement géographique collecté au premier moment ; et
définir un second poids pour des emplacements géographiques restants collectés au cours de la seconde période de temps autres que le troisième emplacement géographique, dans lequel le premier poids est supérieur au second poids ;
une troisième unité de traitement, configurée pour :
déterminer si un moment de début de la seconde période de temps, un moment de fin de la seconde période de temps, et le premier moment où l'utilisateur monte dans le bus satisfont à une première règle prédéfinie ;
après avoir déterminé que le moment de début de la seconde période de temps, le moment de fin de la seconde période de temps, et le premier moment où l'utilisateur monte dans le bus satisfont à la première règle prédéfinie, déterminer si l'emplacement géographique qui est obtenu après le regroupement et où l'utilisateur prend le bus satisfait à une seconde règle prédéfinie ; et
après avoir déterminé que l'emplacement géographique qui est obtenu après le regroupement et où l'utilisateur prend le bus satisfait à la seconde règle prédéfinie, pousser des informations de voyage à l'utilisateur en fonction de l'emplacement géographique qui est obtenu après le regroupement et où l'utilisateur prend le bus, dans lequel les informations de voyage comprennent au moins des informations concernant un bus passant par l'emplacement géographique où l'utilisateur prend le bus et des informations concernant un moment où le bus arrive à l'emplacement géographique où l'utilisateur prend le bus.

6. Appareil selon la revendication 5, dans lequel, lorsqu'il existe une pluralité d'emplacements géographiques dont les quantités de collecte satisfont à la condition, et que l'emplacement géographique dont la quantité de collecte satisfait à la condition est utilisé comme l'emplacement géographique où l'utilisateur prend le bus, la première unité de traitement (904) est spécifiquement configurée pour :
obtenir un poids pour chaque emplacement géographique dont la quantité de collecte satisfait à la condition ; et
utiliser un emplacement géographique ayant un poids maximal comme l'emplacement géographique où l'utilisateur prend le bus.

7. Appareil selon la revendication 5, dans lequel l'appareil comprend en outre au moins l'une parmi une unité d'affichage et une unité de diffusion :
l'unité d'affichage est configurée pour : afficher les informations de voyage ou afficher une carte comprenant les informations de voyage ; et
l'unité de diffusion est configurée pour diffuser les informations de voyage.

8. Appareil selon la revendication 7, dans lequel l'unité d'affichage est en outre configurée pour : lorsqu'il est détecté qu'un bus dans les informations de voyage affichées reçoit une opération de déclenchement, afficher des informations de conduite du bus déclenché, dans lequel les informations de conduite comprennent au moins des informations de congestion d'une route sur laquelle le bus déclenché est conduit ; et l'unité de diffusion vocale est en outre configurée pour diffuser les informations de conduite.

9. Support de stockage lisible par ordinateur comprenant des instructions qui, lorsqu'elles sont exécutées par un ordinateur, amènent l'ordinateur à effectuer le procédé selon les revendications 1 à 4.
